# EUROPEAN PATENT SPECIFICATION

(11) **EP 0 836 674 B1**
(45) Date of publication and mention of the grant of the patent: **10.03.1999**
(21) Application number: 96914329.6
(22) Date of filing: 21.05.1996
(51) Int. Cl.: F02B 17/00

(54) **LOAD CONTROL SYSTEM FOR A STRATIFIED CHARGE ENGINE**
LASTSTEUERUNGSSYSTEM FÜR EINE SCHICHTLADUNGSBRENNKRAFTMASCHINE
SYSTEME DE REGULATION DE CHARGE D'UN MOTEUR A CHARGE STRATIFIEE

(30) Priority: 24.05.1995 GB 9510491
(43) Date of publication of application: 22.04.1998
(73) Proprietor: FORD MOTOR COMPANY LIMITED, Brentwood Essex (GB); FORD-WERKE AKTIENGESELLSCHAFT, 50735 Köln (DE); FORD FRANCE S. A., 92506 Rueil-Malmaison Cédex (FR)
(72) Inventor: MA, Thomas, Tsoi-Hei, Essex CM3 5BY (GB)
(74) Representative: Messulam, Alec Moses
(86) International application number: GB9601216
(87) International publication number: WO9637693

(56) References cited:
- FR-A- 1 546 143
- GB-A- 1 481 121
- GB-A- 2 073 320
- US-A- 3 364 911
- US-A- 3 418 981
- PATENT ABSTRACTS OF JAPAN vol. 010, no. 277 (M-519), 19 September 1986 & JP,A,61 098914 (MAZDA MOTOR CORP), 17 May 1986,
- PATENT ABSTRACTS OF JAPAN vol. 018, no. 465 (M-1665), 30 August 1994 & JP,A,06 147023 (YANMAR DIESEL ENGINE CO LTD), 27 May 1994,

## Description

### Field of the invention

The present invention relates to a system for load control of an engine running with a stratified charge.

### Background of the invention

Multi-cylinder spark ignition stratified charge internal combustion engines have previously been proposed in which the intake charge is drawn into each combustion chamber through at least one intake valve supplied in parallel by at least two flow streams, one being a core stream and the other at least one dilution stream, each stream passing through a respective flow channel in the intake port that is connected to a separate intake manifold regulated by a respective throttle valve, charge stratification being achieved by adding fuel to only the core stream, and controlling the relative volumes and flow directions of the core and dilution streams as they enter the engine combustion chamber such that the fuel contained in the core stream is concentrated near the spark plug. Such an engine will hereinafter be termed a stratified charge engine of the type described.

Because of inevitable mixing within the charge during the engine intake and compression periods, the core and dilution streams will become more and more homogeneous, that is to say, less and less stratified, with time, and the effectiveness of the initial separate entry of the two streams is useful only to the degree of charge stratification that may remain at the time of ignition. The higher the degree of stratification at ignition, the higher the overall dilution limit that can be tolerated by the engine, and consequently the higher the fuel efficiency and the lower the NO_{X} emissions that the engine may produce.

A problem can arise in that varying the strength and the volume of the core mixture is usually the method for varying the power output or load of a stratified charge engine. Because these also affect charge stratification, varying the engine load using these parameters may compromise the quality of stratification at ignition and reduce the overall dilution limit below the full capability of the engine.

US-A-3,364,911 discloses a stratified charge engine of the type described that also proposed in one embodiment means for operating the two throttle valves in unison so that the proportions of the air flow passing along the two manifolds remain in a fixed ratio to one another.

### Object of the invention

The present invention seeks to provide a method of load control which does not significantly affect the quality of the charge stratification.

### Summary of the invention

According to a first aspect of the present invention, there is provided a method for varying the engine load while maintaining optimum charge stratification in a multi-cylinder spark ignition stratified charge internal combustion engine in which the intake charge is drawn into each combustion chamber through at least one intake valve supplied in parallel by at least two flow streams, one being a core stream and the other at least one dilution stream, each stream passing through a respective flow channel in the intake port that is connected to a separate intake manifold regulated by a respective throttle valve, and in which charge stratification is achieved by adding fuel only to the core stream and controlling the relative volumes and flow directions of the core and dilution streams as they enter the engine combustion chamber such that the fuel contained in the core stream is concentrated near the spark plug, in which method a first regulated mass of air is supplied to the combustion chamber through both intake manifolds, the proportions of the regulated air mass passing along the two manifolds being in a fixed ratio to one another, the method being characterised by the steps of
- supplying fuel to the core stream in an amount which, when the engine is warm, is stoichiometrically related to the first regulated air mass flowing through both manifolds, and
- supplying a second regulated mass of gases into the dilution stream, the second regulated mass being in a fixed ratio to the first regulated mass,
the ratios being such as to minimise mixing within the combustion chamber between the core stream and the dilution stream during the intake and compression periods of the engine.

In the invention, under all operating conditions other than high load when some of the efficiency achieved by charge stratification may need to be sacrificed in the interest of maximising output power, substantially the same regions of the combustion chamber are occupied by the core and dilution streams and the charge density in the two regions is increased as engine load is increased.

When the engine is running at its normal warmed up temperature, the fuel should be stoichiometrically related to the first regulated air mass flowing through both manifolds and dilution is provided by the second regulated mass. The second regulated mass of gases may contain ambient air, EGR gases or crankcase gases. Under these conditions, only the stoichiometric fraction of the air in the total charge, corresponding only to the air in the first regulated air mass, reacts with the fuel and this sets the desired load of the engine.

Under cold operating conditions, a greater quantity of fuel may be metered so that the mixture strength for the entire combustible charge including the second regulated mass of air is stoichiometric. In this case, the mixture within the first regulated air mass will be over-rich and will not burn completely. This will release into the exhaust gases combustible components and unused air that can be reacted completely in the exhaust system so as to heat the catalytic converter.

By selecting the correct ratios of the masses of the gases in the core stream and the dilution stream, and correspondingly the correct ratios of their respective entry velocities, it is possible to maintain the appropriate relative velocity conditions within the combustion chamber at the boundary between the streams to minimise mixing so as to conserve the stratification of the streams under all conditions within the regulated load range.

In this proposed method of load control, the overall charge dilution and the degree of charge stratification are intentionally maintained constant over a range of engine operation conditions, and load is controlled by progressively throttling all the flow streams in proportion with one another so that the volumes of all the streams, including the rich core, remain substantially unchanged, while the density of the streams are varied to achieve different loads. This distinguishes the invention from the conventional methods of load control for a stratified charge engine where the size and the concentration of the fuel-rich region are varied with the aim of varying the overall charge dilution and the degree of charge stratification in proportion with load, and keeping the throttling to a minimum.

In the invention, the volume and the mixture strength of the core, together with the effective flow cross-section of the core channel through the intake valve, are design parameters for determining the mean velocity of the core stream as it enters the combustion chamber. Smaller core volumes, richer core mixtures and larger core flow cross-sections all yield a lower mean velocity for the core stream, and vice-versa. The invention makes use of these parameters to preset the core stream velocity in relation to the dilution stream velocity with the aim of maintaining minimum mixing between the streams within the combustion chamber for a range of engine loads.

The invention is based on the realisation that while the degree of stratification at ignition is dependent on the initial relative masses of the core stream and the dilution stream, it is equally dependent on the relative velocities of these streams while entering the combustion chamber. If these relative velocities are incorrectly selected, the resulting mixing within the combustion chamber during the intake and compression periods will significantly reduce or destroy the initial stratification. In order to maximise the degree of charge stratification at ignition, the mixing should therefore be kept to a minimum in order to conserve the stratification. This can be achieved by controlling the relative angular velocity between the core and the dilution streams to be substantially zero at their boundary as they move together within the combustion chamber.

Since the charge motion within the engine cylinder typically follows a single vortex velocity field, a solid body rotation about a horizontal (tumble) or vertical (swirl) axis will have the lowest mixing across the field. This can be achieved by arranging the flow stream entering the cylinder further away from the axis of rotation to have a higher mean velocity than the flow stream entering nearer the axis, the mean velocities at the time of entry into the combustion chamber being in substantially the same ratio as the respective mean radii of rotation within the vortex velocity field.

Thus for a given intake port entrance geometry into the combustion chamber and for a given level of dilution of the intake charge, the optimum mean velocity ratio between the streams to produce minimum mixing is a derived design parameter and is substantially constant. A direct consequence of this is that the optimum relative volumes of the flow streams and the way they are distributed within the combustion chamber are also derived design parameters and these should be kept constant even when the engine load is varied.

To find the best charge stratification which enables the engine to operate at the highest level of gas dilution while maintaining good combustion stability, an iterative process may be used to establish, for a series of different levels of gas dilution, the optimum velocity ratios between the core and the dilution streams for minimum mixing and then to choose from the series the best set of parameters for presetting the engine load control system so as to maintain the correct flow ratios under all conditions within the regulated load range.

According to a second aspect of the present invention, there is provided a multi-cylinder spark ignition stratified charge internal combustion engine in which the intake charge is drawn into each combustion chamber through at least one intake valve supplied in parallel by at least two flow streams, one being a core stream and the other at least one dilution stream, each stream passing through a respective flow channel in the intake port that is connected to a separate intake manifold regulated by a respective throttle valve, charge stratification being achieved by adding fuel only to the core stream, and controlling the relative volumes and flow directions of the core and dilution streams as they enter the engine combustion chamber such that the fuel contained in the cote stream is concentrated near the spark plug, and means for operating the two throttle valves to supply to the combustion chamber a combined first regulated mass of air that passes through both intake manifolds, the proportions of the regulated air mass passing along the two manifolds being in a fixed ratio to one another, characterised by
- means for supplying fuel to the core stream in an amount which, when the engine is warm, is stoichiometrically related to the first regulated air mass flowing through both manifolds, and
- a third throttle valve for supplying a second regulated mass of gases into the dilution stream, the second regulated mass being in a fixed ratio to the first regulated mass,
the ratios being such as to minimise mixing within the combustion chamber between the core stream and the dilution stream during the intake and compression periods of the engine.

The third throttle valve may control the supply of additional air, EGR gases or crankcase gases to the dilution stream.

The three throttle valves can be controlled electronically to maintain the desired velocity ratios entering the combustion chamber so as to conserve the stratification conditions. Moreover, because the entire manifold system is under the same manifold pressure, the same can be achieved by mechanically linking or ganging together throttle valves of similar geometry, whereupon the ratios of the maximum cross sections of the throttle valves will set the mass flow ratios in the different streams. Ideally the gases in the combustion chamber should be arranged to rotate at all times as a solid body to avoid shear at the boundary between the core stream and the dilution stream. In this way, the stratification achieved during the intake stroke is substantially retained during the compression stroke until the instant of ignition.

It is possible to fit a two-position valve in series with the second throttle valve that controls the proportion of the first regulated air stream supplied into the dilution stream, to inhibit selectively the flow of the first air stream into the dilution stream and force all the first regulated air to enter the combustion chamber through the core stream. This two-position valve is advantageously closed under moderately high load conditions and its effect will be to reduce the charge stratification within the combustion chamber. Instead, the core stream will enter the combustion chamber with a higher velocity thereby promoting mixing and homogeneity within the combustion chamber.

If desired, a further two-position valve may be fitted in series with the third throttle valve that controls the supply of the second regulated gas stream, for selectively inhibiting the flow of dilution gases and preventing the addition of dilution gases into the dilution stream. In this way, it is possible to enable the combustion chamber to receive a full stoichiometric charge under high load conditions. Such disablement will also interfere with the charge stratification and increase the mixing of the total charge, but under high load conditions the resulting more homogeneous mixture is to be preferred.

Preferably, a fourth throttle valve may be connected to the first intake manifold, in parallel with the first throttle valve, for supplying more ambient air to the first intake manifold under high engine load conditions. The fourth throttle valve may be linked indirectly with the other three throttle valves such that it is closed under low and part load conditions and begins to open after the other throttle valves have reached a predetermined opening position.

Preferably, the two two-position valves may be operated to disable the flows through the second and the third throttle valves at the same time as the fourth throttle valve begins to open.

In the stratified charge engine of the type described, because the separate intake manifolds are interconnected at the intake valves, the manifold pressure is common to all the throttle valves and consequently the ratios of the flows through the throttle valves would remain in the ratios of Their respective flow cross-sectional areas. By designing the throttle valves to be of similar geometry and by ganging them to operate in unison, one control step will suffice to vary all the flows in fixed ratios to one another.

The preferred engine load control system of the present invention takes advantage of this to achieve simplicity, low cost and high reliability. It eliminates the need of using a multiplicity of electronically controlled throttles which must be operated continuously to maintain the required ratios between the respective flow streams, as would be the case had the individual throttles not been sized and linked together.

### Brief description of the drawings

The invention will now be described further, by way of example, with reference to the accompanying drawings, in which :-
Figure 1 is a schematic diagram of an intake system for an internal combustion engine,
Figure 2 is a diagram showing the possible range of values of the volumes and mixture strengths in the separate streams entering the combustion chamber for a given level of charge dilution, the line S indicating where stratification is best conserved, and
Figure 3 is a diagrammatic representation of one cylinder of Figure 1 and contains the key to the cross-hatching employed in Figure 2.

### Detailed description of the referred embodiment

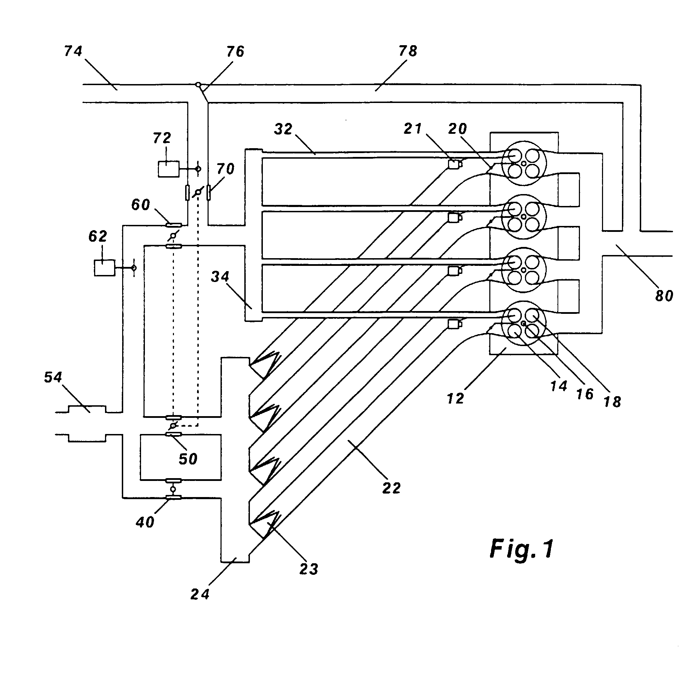

In Figure 1 there is shown a cylinder head 12 of an engine having four cylinders each having two intake valves 14, a spark plug 16 and two exhaust valves 18. All the exhaust valves are connected to an exhaust pipe 80 through a common exhaust manifold.

On the intake side, the two intake valves 14 have separate intake ports one of which has a butterfly valve 20 for port deactivation which remains closed for all but high load operation. This is conventional and intended to increase the speed and swirl of the intake charge during idle and part load operations.
The intake valve associated with the other intake port is connected to receive the intake charge through separate intake manifolds 24 and 34 having individual branches 22 and 32 respectively. Each branch 22 contains a non-return valve 23 that only allows flow towards the intake port. Near the intake port a fuel injector 21 is provided for introducing fuel into the air drawn in through the manifold 24.

The plenum of the intake manifold 24 is connected to a mass air flow meter 54 through a main throttle valve 50.
Similarly the plenum of the intake manifold 34 is connected to the same mass air flow meter 54 through a second throttle valve 60 that is ganged with the main throttle valve 50. The dimensions of the throttle valves 50 and 60 are such that the ratio of the air mass flowing through the two intake manifolds is fixed. A further throttle valve 70 ganged with the main throttle valve 50 allows dilution gases to be introduced into the manifold 34. The dimensions of the throttle valve 70 is such that the gas mass flow through it is in a fixed ratio with the air mass flow through the main throttle valve 50. These dilution gases, depending on the position of a changeover valve 76 may either be ambient air drawn in through a pipe 74 or exhaust gases drawn in through an EGR pipe 78 that leads to the exhaust pipe 80.

The throttle valves 60 and 70 can be rendered inoperative by the two-position valves 62 and 72 respectively connected in series with them. The drawing also shows a supplementary throttle valve 40 that is connected in parallel with the main throttle valve 50.

To describe the operation of the engine of Figure 1, it will first be assumed that all the various valves are in the positions illustrated. This corresponds to part load operation wherein the intake charge is drawn in only through one intake port. Air is drawn past the three throttle valves 50, 60 and 70 in fixed ratios to one another and, because the valves are ganged together to operate in unison, these ratios remain constant over the load range regulated by the main throttle valve 50.

At the intake port, air and fuel are drawn in through the manifold branches 22 and air only is drawn in through the manifold branches 32. Because of the geometry of the intake port, which is designed to promote swirl, the air from the branch 32 is directed towards the periphery of the combustion chamber while the fuel and air mixture from the branch 22 is directed towards the centre of the combustion chamber. The intention of this configuration is to create a radially stratified charge that retains a concentration gradient within the combustion chamber throughout the compression stroke up to the time of ignition. However, though one can create the stratification initially with a wide range of stream velocities, densities and mixture strengths, the stability of the charge stratification will depend strongly on the entry velocities of the two streams. If the two velocities are correctly preset relative to one another by appropriate dimensioning of the intake throttle valves then the intake charge will rotate as a solid body within the combustion chamber and retain the initial radial stratification. On the other hand, if either stream is flowing with a greater angular velocity than the other at the common boundary between the streams, then eddies are created that increase the mixing between the streams and the initial stratification is dissipated.

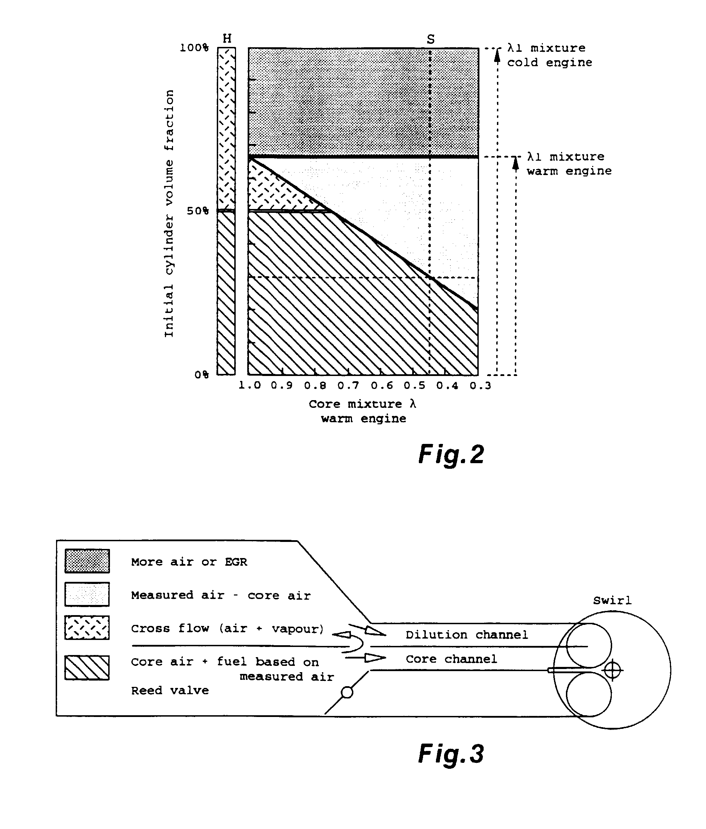

This point can be better understood by reference to Figures 2 and 3. In Figure 2, the core mixture at the centre of the combustion chamber is shaded with diagonal lines. Moving horizontally across the diagram in vertical columns, the same amount of fuel can be introduced by reducing the volume of the core mixture at the same time as increasing the core mixture strength represented by a decreasing core relative air/fuel ratio λ. The corresponding volume of the dilution gases will be increasing as the volume of the core is decreasing, these dilution gases being formed of air drawn in through the throttle valve 60 (shaded light grey) and air or EGR gases drawn in through the throttle valve 70 (shaded dark grey). The small triangle at the left of the drawing represents internally recirculated air and fuel that is carried across from one cylinder to another.

At a given engine load, although the same amount of fuel is injected, it is possible to operate along any vertical line in Figure 2, only at the example line S will the angular speeds of the two streams be correctly matched to achieve solid body rotation. If a larger proportion of air is introduced into the core stream to mix with the injected fuel resulting in a weaker core mixture strength, then the core stream will move faster than the dilution stream and will spread outwards in the combustion chamber. Conversely, if a smaller proportion of air is introduced into the core stream to mix with the injected fuel resulting in a richer core mixture strength, then the core stream will move slower than the dilution stream which will then spread inwards and displace the core mixture. The present invention therefore proposes to take steps to preset the relative mass flows in the different manifolds according to an optimum vertical line S in Figure 2, so as to conserve the charge stratification within the combustion chamber up to the instant of combustion, over the designed part-load control range.

The load control range over which stratification is conserved does not extend up to full load because the valve 20 are opened at full load and the concern is then to maximise charge homogeneity rather than charge stratification.

As described so far, the dilution gases comprise air drawn in through the pipe 74 and this is the setting to maximise lean burn. However, if there are NOₓ emission problems associated with the after-treatment of the lean exhaust gases, then the changeover valve 76 can be used to recirculate exhaust gases instead of drawing ambient air into the dilution stream. This allows the overall mixture strength to be kept at stoichiometry with EGR stratification and a three-way catalytic converter may be used for after-treatment of the exhaust gases.

The valve 72 is closed at full load operation. The effect of closing this valve is to stop the dilution supply and to eliminate the fraction represented in dark grey in Figure 2 giving rise to a column H as shown in the left hand side of Figure 2 with an overall mixture calibrated at stoichiometry.

The valve 62 can be switched to its closed position at the same time as the valve 72 in order to destroy any remaining stratification, as is desirable under full load operation.

The valve 40 is intended to compensate for the small size of the main throttle valve 50 when the engine is operating at full load with the valves 62 and 72 closed. This valve will be initially closed when the valves 62 and 72 are closed and will thereafter progressively open as the demand pedal is depressed.

The invention relies on selecting the sizes of the throttle valves 50, 60 and 70 and the design of the intake ports to achieve a stable stratification in the combustion charge over a wide range of engine loads. The ratios of the throttles could be maintained by electronic control but because one needs only to maintain the ratios fixed, the expensive electronic control can be avoided by resorting to the simple alternative of rigidly connecting the throttle valves to one another.

Stratification can provide advantages not only in terms of lean burn and reduced pumping losses, but also in assisting rapid light-off of the exhaust catalytic converter when the engine is started from cold. In this case the charge volume ratios employed correspond to the same preset vertical line S at which the stratification is optimised, but greater concentration of fuel is introduced into the core stream sufficient to make the mixture strength of the whole charge stoichiometric including the dilution gases. This will result in incomplete combustion within the combustion chamber because of the well conserved stratification, but the exhaust gases will contain combustible components and unused air that can react completely in the exhaust system to heat the catalytic converter. This reaction can either be by catalytic conversion or by ignition.

The embodiment of the invention described so far refers to an engine in which the intake port is designed to produce swirl and the entry velocities of the streams are arranged in solid body rotation about an axis parallel with the axis of the engine cylinder to produce a radially stratified charge across the cylinder bore. However, the invention is equally applicable to an engine in which the intake valves are designed to produce tumble and the entry velocities of the streams are arranged in solid body rotation about an axis perpendicular to the cylinder axis to produce another stratified charge across the height and diameter of the engine cylinder with the fuel-rich region centred in the middle of the cylinder.

## Claims

1. A method for varying the engine load while maintaining optimum charge stratification in a multi-cylinder spark ignition stratified charge internal combustion engine in which the intake charge is drawn into each combustion chamber through at least one intake valve supplied in parallel by at least two flow streams, one being a core stream and the other at least one dilution stream, each stream passing through a respective flow channel in the intake port that is connected to a separate intake manifold regulated by a respective throttle valve, and in which charge stratification is achieved by adding fuel only to the core stream and controlling the relative volumes and flow directions of the core and dilution streams as they enter the engine combustion chamber such that the fuel contained in the core stream is concentrated near the spark plug, in which method a first regulated mass of air is supplied to the combustion chamber through both intake manifolds, the proportions of the regulated air mass passing along the two manifolds being in a fixed ratio to one another, the method being characterised by the steps of
• supplying fuel to the core stream in an amount which, when the engine is warm, is stoichiometrically related to the first regulated air mass flowing through both manifolds, and
• supplying a second regulated mass of gases into the dilution stream, the second regulated mass being in a fixed ratio to the first regulated mass,
the ratios being such as to minimise mixing within the combustion chamber between the core stream and the dilution stream during the intake and compression periods of the engine.

2. A method as claimed in claim 1, wherein the second regulated mass of gases contains ambient air, EGR gases or crankcase gases.

3. A method as claimed in claim 1, wherein under cold operating conditions the quantity of fuel metered is stoichiometrically related to the entire combustible charge supplied to the engine consisting of both the first and the second regulated air masses.

4. A multi-cylinder spark ignition stratified charge internal combustion engine in which the intake charge is drawn into each combustion chamber through at least one intake valve (14) supplied in parallel by at least two flow streams, one being a core stream and the other at least one dilution stream, each stream passing through a respective flow channel (22,32) in the intake port that is connected to a separate intake manifold (24,34) regulated by a respective throttle valve (50,60), charge stratification being achieved by adding fuel only to the core stream, and controlling the relative volumes and flow directions of the core and dilution streams as they enter the engine combustion chamber such that the fuel contained in the core stream is concentrated near the spark plug (16), and means for operating the two throttle valves (50,60) to supply to the combustion chamber a combined first regulated mass of air that passes through both intake manifolds, the proportions of the regulated air mass passing along the two manifolds (24,34) being in a fixed ratio to one another, characterised by
• means (21) for supplying fuel to the core stream in an amount which, when the engine is warm, is stoichiometrically related to the first regulated air mass flowing through both manifolds (24,34), and
• a third throttle valve (70) for supplying a second regulated mass of gases into the dilution stream, the second regulated mass being in a fixed ratio to the first regulated mass,
the ratios being such as to minimise mixing within the combustion chamber between the core stream and the dilution stream during the intake and compression periods of the engine.

5. An engine as claimed in claim 4, wherein the charge motion within the engine cylinder follows a single vortex velocity field, and wherein the flow stream entering the cylinder further away from the axis of rotation is arranged to have a higher mean velocity than the flow stream entering nearer the axis, the mean velocities at the time of entry into the combustion chamber being in substantially the same ratio as the respective mean radii of rotation within the vortex velocity field.

6. An engine as claimed in claim 4 or 5, wherein the three throttle valves (50,60,70) are controlled electronically to maintain the desired velocity ratios entering the combustion chamber so as to conserve the stratification conditions.

7. An engine as claimed in claim 4 or 5, wherein the three throttle valves (50,60,70) are geometrically similar and rigidly connected to operate in unison to maintain the desired velocity ratios entering the combustion chamber so as to conserve the stratification conditions.

8. An engine as claimed in any of claims 4 to 7, wherein a two-position valve (62) provided in series with the second throttle valve (60) that controls the proportion of the first regulated air stream supplied into the dilution stream, to inhibit selectively the flow of the first air stream into the dilution stream and force all the first regulated air to enter the combustion chamber through the core stream.

9. An engine as claimed in any one of claims 4 to 8, wherein a two-position valve (72) is provided in series with the third throttle valve (70) that controls the supply of the second regulated gas stream, for selectively inhibiting the flow of dilution gases and preventing the addition of dilution gases into the dilution stream.

10. An engine as claimed in any one of claims 4 to 9, wherein a fourth throttle valve (40) is connected to the first intake manifold (24), in parallel with the first throttle valve (50), for supplying more ambient air to the first intake manifold under high engine load conditions.

11. An engine as claimed in claim 10, wherein the fourth throttle valve (40) is linked indirectly with the other three throttle valves (50,60,70) such that it is closed under low and part load conditions and begins to open after the other throttle valves (50,60,70) have reached a predetermined opening position.

12. An engine as claimed in claims 7, 8 and 10, wherein means are provided to operate the two two-position valves (62,72) to disable the flows through the second and third throttle valves (60,70) at the same time as the fourth throttle valve (40) begins to open.

## Patentansprüche

1. Ein Verfahren, um die Motorlast in einem Mehrzylinder-Verbrennungsmotor mit Funkenzündung und geschichteter Ladung zu verändern, während die bestmögliche Ladungsschichtung erhalten bleibt, wobei in diesem Motor die Einlaßladung in jede Brennkammer durch mindestens ein Einlaßventil gezogen wird, das parallel von mindestens zwei Strömen, von denen einer ein Kernstrom ist, und von denen der andere mindestens ein Verdünnungsstrom ist, versorgt wird, und jeder Strom einen entsprechenden Flußkanal im Einlaßkanal durchläuft, der mit einem durch eine entsprechende Drosselklappe geregelten, separaten Ansaugkrümmer verbunden ist, und in welchem die Schichtung der Ladung dadurch erreicht wird, daß Kraftstoff nur dem Kernstrom zugegeben wird, und daß die relativen Volumina und Flußrichtungen der Kern- und Verdünnungsströme gesteuert werden, wenn sie in die Brennkammer des Motors gelangen, so daß der im Kernstrom enthaltene Kraftstoff nahe der Zündkerze konzentriert ist, wobei in diesem Verfahren durch beide Einlaßkrümmer eine erste, geregelte Luftmasse zur Brennkammer geliefert wird, und die Anteile der die beiden Einlaßkrümmer durchlaufenden geregelten Luftmassen in einem festen Verhältnis zueinander stehen, und das Verfahren durch die folgenden Schritte gekennzeichnet ist:
- Versorgung des Kern stromes mit Kraftstoff in einer Menge, welche bei warmem Motor in einem stöchiometrischen Verhältnis zu der ersten durch die beiden Ansaugkrümmer fließenden, geregelten Luftmasse steht; und
- Versorgung des Verdünnungsstromes mit einer zweiten, geregelten Gasmasse, wobei die zweite geregelte Masse in einem festen Verhältnis zu der ersten geregelten Masse steht;
und die Verhältnisse so beschaffen sind, daß eine Vermischung zwischen Kernstrom und Verdünnungsstrom innerhalb der Brennkammer während der Ansaug- und Verdichtungstakte des Motors minimiert wird.

2. Ein Verfahren nach Anspruch 1, in dem die zweite geregelte Gasmasse Umgebungsluft, rückgeführte Abgase oder Gase aus dem Kurbelgehäuse enthält.

3. Ein Verfahren nach Anspruch 1, in dem beim Betrieb des kalten Motors die dosierte Kraftstoffmenge im stöchiometrischen Verhältnis zur gesamten zum Motor gelieferten brennbaren Ladung steht, die sowohl die erste als auch die zweite geregelte Luftmasse enthält.

4. Ein Mehrzylinder-Verbrennungsmotor mit Funkenzündung und geschichteter Ladung, in dem die Einlaßladung in jede Brennkammer durch mindestens ein Einlaßventil (14) gezogen wird, das parallel von mindestens zwei Strömen, von denen einer ein Kernstrom ist, und von denen der andere mindestens ein Verdünnungsstrom ist, versorgt wird, und jeder Strom einen entsprechenden Flußkanal (22, 23) im Einlaßkanal durchläuft, der mit einem durch eine entsprechende Drosselklappe (50, 60) geregelten, separaten Ansaugkrümmer (24, 34) verbunden ist, wobei die Schichtung der Ladung dadurch erreicht wird, daß Kraftstoff nur dem Kernstrom zugegeben wird, und daß die relativen Volumina und Flußrichtungen der Kern- und Verdünnungsströme gesteuert werden, wenn sie in die Brennkammer des Motors gelangen, so daß der im Kernstrom enthaltene Kraftstoff nahe der Zündkerze (16) konzentriert ist, und eine Vorrichtung zur Betätigung der beiden Drosselventile (50, 60), um die Brennkammer mit einer vereinigten ersten, geregelten Luftmasse zu versorgen, welche durch die beiden Ansaugkrümmer strömt, wobei die Anteile der durch die beiden Ansaugkrümmer (24, 34) strömenden geregelten Luftmassen in einem festgelegten Verhältnis zueinander stehen, gekennzeichnet durch:
- Eine Vorrichtung (21), um eine solche Menge an Kraftstoff in den Kernstrom zu liefern, daß diese bei warmem Motor in stöchiometrischer Beziehung zu der ersten geregelten, durch die beiden Ansaugkrümmer (24, 34) fließenden Luftmasse steht; und
- ein drittes Drosselventil (70), um eine zweite geregelte Gasmasse in den Verdünnungsstrom zu liefern, wobei die zweite geregelte Masse zu der ersten geregelten Masse in einem festen Verhältnis steht;
wobei die Verhältnisse so beschaffen sind, daß innerhalb der Brennkammer die Vermischung zwischen dem Kernstrom und dem Verdünnungsstrom während der Ansaug- und Verdichtungstakte des Motors minimiert wird.

5. Ein Motor nach Anspruch 4, in dem die Ladungsbewegung innerhalb des Motorzylinders dem Geschwindigkeitsfeld eines einzelnen Wirbels folgt, und in dem der weiter von der Rotationsachse entfernt in den Zylinder eintretende Strom so angeordnet ist, daß er eine höhere Durchschnittsgeschwindigkeit hat als der näher an der Achse eintretende Strom, wobei die Durchschnittsgeschwindigkeiten zum Zeitpunkt des Eintritts in die Brennkammer im wesentlichen im gleichen Verhältnis zueinander stehen wie die entsprechenden Durchschnittsradien der Rotation innerhalb des Geschwindigkeitsfeldes.

6. Ein Motor nach den Ansprüchen 4 oder 5, in dem die drei Drosselventile (50, 60, 70) elektronisch gesteuert werden, um die beim Eintritt in die Brennkammer gewünschten Geschwindigkeitsverhältnisse beizubehalten und so die Schichtungsbedingungen zu erhalten.

7. Ein Motor nach den Ansprüchen 4 oder 5, in dem die drei Drosselventile (50, 60, 70) geometrisch ähnlich und fest miteinander verbunden sind, um im Gleichklang zu arbeiten und folglich die beim Eintritt in die Brennkammer gewünschten Geschwindigkeitsverhältnisse beizubehalten und so die Schichtungsbedingungen aufrechtzuerhalten.

8. Ein Motor nach irgendeinem der Ansprüche 4 bis 7, in dem in Reihe mit dem zweiten Drosselventil (60) ein Umstellventil (62) bereitgestellt wird, das den Anteil des in den Verdünnungsstrom geleiteten, ersten geregelten Luftstromes regelt, um den Fluß des ersten in den Verdünnungsstrom gelieferten Luftstroms selektiv zu unterbinden, und um die gesamte erste geregelte Luft dazu zu zwingen, über den Kernstrom in die Brennkammer zu gelangen.

9. Ein Motor nach irgendeinem der Ansprüche 4 bis 8, in dem in Reihe mit dem dritten Drosselventil (70) ein Umstellventil (72) bereitgestellt wird, das die Versorgung mit dem zweiten geregelten Gasstrom steuert, um den Fluß von Verdünnungsgasen selektiv zu unterbinden und die Zugabe von Verdünnungsgasen in den Verdünnungsstrom zu verhindern.

10. Ein Motor nach irgendeinem der Ansprüche 4 bis 9, in dem ein viertes Drosselventil (40) parallel zu dem ersten Drosselventil (50) mit dem ersten Ansaugkrümmer (24) verbunden ist, um bei Bedingungen hoher Motorlast mehr Umgebungsluft zum ersten Ansaugkrümmer zu liefern.

11. Ein Motor nach Anspruch 10, in dem das vierte Drosselventil (40) indirekt mit den drei anderen Drosselventilen (50, 60, 70) verbunden ist, so daß es unter den Bedingungen eines Betriebes mit niedriger Last oder Teillast geschlossen ist und sich zu öffnen beginnt, nachdem die anderen Drosselventile (50, 60, 70) eine vorbestimmte Öffnungsstellung erreicht haben.

12. Ein Motor nach den Ansprüchen 7, 8 oder 10, in dem eine Vorrichtung bereitgestellt ist, um zwei Umschaltventile (62, 72) so zu betreiben, daß die Flüsse durch das zweite und dritte Drosselventil (60, 70) zur selben Zeit unterbrochen wird, zu der sich das vierte Drosselventil (40) zu öffnen beginnt.

## Revendications

1. Procédé destiné à faire varier la charge d'un moteur tout en maintenant une stratification optimum de la charge d'admission dans un moteur multicylindre à combustion interne à charge stratifiée à allumage par étincelles dans lequel la charge d'admission est aspirée jusque dans chaque chambre de combustion par l'intermédiaire d'au moins une soupape d'admission alimentée en parallèle par au moins deux flux d'écoulement, l'un étant un flux de base et l'autre au moins un flux de dilution, chaque flux passant par un canal d'écoulement respectif dans l'orifice d'admission qui est relié à un collecteur d'admission séparé régulé par une soupape d'étranglement respective, et dans lequel une stratification de la charge est obtenue en ajoutant du carburant uniquement au flux de base et en commandant les volumes relatifs et les directions d'écoulement des flux de base et de dilution lorsqu'ils pénètrent dans la chambre de combustion du moteur de façon que le carburant contenu dans le flux de base soit concentré à proximité de la bougie d'allumage, dans lequel procédé une première masse régulée d'air est introduite dans la chambre de combustion par l'intermédiaire de deux collecteurs d'admission, les proportions de la masse d'air régulée passant le long des deux collecteurs étant dans un rapport fixe l'une avec l'autre, le procédé étant caractérisé par les étapes consistant à :
• introduire du carburant dans le flux de base dans une quantité qui, lorsque le moteur est chaud, est liée de façon stoechiométrique à la première masse d'air régulée s'écoulant par les deux collecteurs, et
• introduire une seconde masse régulée de gaz dans le flux de dilution, la seconde masse régulée étant dans un rapport fixe avec la première masse régulée,
les rapports étant tels qu'ils minimisent le mélange à l'intérieur de la chambre de combustion entre le flux de base et le flux de dilution pendant les périodes d'admission et de compression du moteur.

2. Procédé selon la revendication 1, dans lequel la seconde masse régulée de gaz contient de l'air ambiant, des gaz de recirculation des gaz d'échappement (RGE) ou des gaz du carter.

3. Procédé selon la revendication 1, dans lequel dans des conditions de fonctionnement à froid, la quantité de carburant introduite est liée de façon stoechiométrique à la totalité de la charge combustible fournie au moteur, constituée à la fois de la première et de la seconde masses d'air régulé.

4. Moteur multicylindre à combustion interne à charge stratifiée à allumage par étincelles dans lequel la charge d'admission est aspirée jusque dans chaque chambre de combustion par l'intermédiaire d'au moins une soupape d'admission (14) alimentée en parallèle par au moins deux flux d'écoulement, l'un étant un flux de base et l'autre au moins un flux de dilution, chaque flux passant par un canal d'écoulement respectif (22, 32) dans l'orifice d'admission qui est relié à un collecteur d'admission séparé (24, 34) régulé par une soupape d'étranglement respective (50, 60), la stratification de la charge étant obtenue en ajoutant du carburant uniquement dans le flux de base, et en commandant les volumes relatifs et les directions d'écoulement des flux de base et de dilution lorsqu'ils pénètrent dans la chambre de combustion du moteur de façon que le carburant contenu dans le flux de base se concentre près de la bougie d'allumage (16), et un moyen destiné à actionner les deux soupapes d'étranglement (50, 60) afin de fournir à la chambre de combustion une première masse régulée d'air combinée qui passe par les deux collecteurs d'admission, les proportions de la masse d'air régulée passant suivant les deux collecteurs (24, 34) étant dans un rapport fixe l'une par rapport à l'autre, caractérisé par
• un moyen (21) destiné à introduire du carburant dans le flux de base dans une quantité qui, lorsque le moteur est chaud, est liée de façon stoechiométrique à la première masse d'air régulée s'écoulant par les deux collecteurs (24, 34), et
• une troisième soupape d'étranglement (70) destinée à introduire une seconde masse régulée de gaz dans le flux de dilution, la seconde masse régulée étant dans un rapport fixe avec la première masse régulée,
les rapports étant tels qu'ils minimisent le mélange à l'intérieur de la chambre de combustion entre le flux de base et le flux de dilution pendant les périodes d'admission et de compression du moteur.

5. Moteur selon la revendication 4, dans lequel le mouvement de la charge à l'intérieur du cylindre du moteur suit un seul champ de vitesse tourbillonnaire, et dans lequel le flux d'écoulement pénétrant dans le cylindre plus loin de l'axe de rotation est conçu pour présenter une vitesse moyenne plus élevée que le flux d'écoulement pénétrant plus près de l'axe, les vitesses moyennes à l'instant de l'entrée dans la chambre de combustion étant dans pratiquement le même rapport que les rayons moyens respectifs de rotation à l'intérieur du champ de vitesse tourbillonnaire.

6. Moteur selon la revendication 4 ou 5, dans lequel les trois soupapes d'étranglement (50, 60, 70) sont commandées électroniquement afin de maintenir les rapports de vitesse désirés à l'entrée de la chambre de combustion de manière à conserver les conditions de stratification.

7. Moteur selon la revendication 4 ou 5, dans lequel les trois soupapes d'étranglement (50, 60, 70) sont géométriquement similaires, et reliées de façon rigide afin de fonctionner de concert de manière à maintenir les rapports de vitesse désirés à l'entrée de la chambre de combustion de manière à conserver les conditions de la stratification.

8. Moteur selon l'une quelconque des revendications 4 à 7, dans lequel une soupape à deux positions (62) est disposée en série avec la seconde soupape d'étranglement (60) qui commande la proportion du premier flux d'air régulé qui est introduite dans le flux de dilution, afin d'empêcher sélectivement l'écoulement du premier flux d'air jusque dans le flux de dilution et de forcer la totalité du premier air régulé à pénétrer dans la chambre de combustion par l'intermédiaire du flux de base.

9. Moteur selon l'une quelconque des revendications 4 à 8, dans lequel une soupape à deux positions (72) est disposée en série avec la troisième soupape d'étranglement (70) qui commande l'alimentation du second flux de gaz régulé, afin d'inhiber sélectivement l'écoulement de gaz de dilution et d'empêcher l'addition de gaz de dilution dans le flux de dilution.

10. Moteur selon l'une quelconque des revendications 4 à 9, dans lequel une quatrième soupape d'étranglement (40) est reliée au premier collecteur d'admission (24), en parallèle avec la première soupape d'étranglement (50), afin de fournir davantage d'air ambiant au premier collecteur d'admission dans des conditions de charge élevée du moteur.

11. Moteur selon la revendication 10, dans lequel la quatrième soupape d'étranglement (40) est liée indirectement aux trois autres soupapes d'étranglement (50, 60, 70) de sorte qu'elle est fermée dans des conditions de faible charge et de charge partielle, et commence à s'ouvrir après que les autres soupapes d'étranglement (50, 60, 70) ont atteint une position d'ouverture prédéterminée.

12. Moteur selon les revendications 7, 8 et 10, dans lequel des moyens sont prévus pour actionner les soupapes à deux positions (62, 72) afin d'interdire les écoulements par l'intermédiaire des seconde et troisième soupapes d'étranglement (60, 70) en même temps que la quatrième soupape d'étranglement (40) qui commence à s'ouvrir.
